# EUROPEAN PATENT SPECIFICATION

(11) **EP 3 633 190 B1**
(45) Date of publication and mention of the grant of the patent: **05.01.2022**
(21) Application number: 19198673.6
(22) Date of filing: 20.09.2019
(51) Int. Cl.: F03D 80/70, F16C 35/04

(54) **A BEARING ARRANGEMENT FOR A WIND TURBINE, WIND TURBINE AND METHOD FOR MANUFACTURING A WIND TURBINE**
LAGERANORDNUNG FÜR EINE WINDTURBINE, WINDTURBINE UND VERFAHREN ZUR HERSTELLUNG EINER WINDTURBINE
AGENCEMENT DE PALIER D'UNE ÉOLIENNE, ÉOLIENNE ET PROCÉDÉ DE FABRICATION D'UNE ÉOLIENNE

(30) Priority: 01.10.2018 US 201816148299
(43) Date of publication of application: 08.04.2020
(73) Proprietor: Siemens Gamesa Renewable Energy A/S, 7330 Brande (DK)
(72) Inventor: Moeskjaer, Martin, 7600 Struer (DK)
(74) Representative: Aspacher, Karl-Georg

(56) References cited:
- EP-A1- 2 754 893
- EP-A1- 3 318 753
- WO-A1-2018/153418
- KR-A- 20110 139 957
- US-A1- 2017 211 547

## Description

A bearing arrangement for a wind turbine, wind turbine and method for assembling the bearing arrangement

The present invention relates to a bearing arrangement for a wind turbine, to a wind turbine and to a method for assembling the bearing arrangement.

In wind turbines, bearing arrangements are used to support, for example, the main shaft connecting the rotor to the generator. The main shaft is subjected to substantial loads during the operation or the wind turbine. For this reason, main shafts typically have a diameter of 1 m and larger.

Prior art bearing arrangements typically have one of two configurations explained hereinafter.

According to a first configuration, the two bearings supporting the main shaft are housed in separate bearing housings. Each bearing housing is bolted to the bed frame inside the nacelle of the wind turbine.

For example, EP 2 754 893 Al discloses a wind turbine having a rotation shaft supported rotatably to a nacelle via a first bearing and a second bearing. The bearing housing of each of the bearings is supported by a base plate of the nacelle, and also connected to each other by a connection member of a cylindrical shape. Further, a method for assembling the wind turbine is disclosed.

According to a second configuration, the two bearings supporting the main shaft are housed in a single housing. The single housing is bolted to the bed frame.

Disadvantages associated with the first configuration are that it is weak in bending around a horizontal axis running at right angles with respect to the axis of rotation of the main shaft. The second configuration is disadvantageous in that it is difficult to access the bearings and corresponding seals, for example, for maintenance purposes.

It is one object of the present invention to provide an improved bearing arrangement, an improved wind turbine and an improved method for assembling a bearing arrangement.

Accordingly, a bearing arrangement for a wind turbine is provided. The bearing arrangement comprises a bed frame, a support structure mounted to the bed frame, a shaft, bearings supporting the shaft rotatably around a shaft axis, and bearing housings supporting one of the bearings respectively, wherein the bearing housings are mounted to opposite faces of the support structure, the faces facing in the axial direction with respect to the shaft axis.

By providing the support structure, the stiffness in bending about a horizontal axis perpendicular to the shaft axis is increased. The stiffness of the bearing arrangement is in particular enhanced by connecting the bearings to each other by use of the support structure, and connecting the support structure to the bed frame to thus form a single unit. Said single unit transfers, preferably, all rotor bending loads to the bed frame.

Having the bearing housings mounted on the axial faces of the support structure also allows for a more uniform support of the bearing housings, the support being distributed around the entire circumference of each bearing housing or at least a portion thereof instead of the traditional point support.

At the same time, due to the bearing housings being mounted on the axial faces of the support structure, the bearings and corresponding seals are easily accessible. This simplifies assembly and serviceability, in particular, replacement of bearing seals.

Preferably, the support structure is mounted to the bed frame by a plurality of bolts.

The shaft can have, for example, a diameter larger than 1 m.

The bearings may be configured as roller bearings or sliding bearings. Spherical bearings are preferable.

For example, two or more bearings are provided. For example, one of the bearings is a fixed bearing and the other bearing is a floating bearing.

The shaft axis may be orientated horizontally or substantially horizontally. This is to include deviations of up to 20° from the horizontal axis.

The faces of the support structure are, preferably, ringshaped. The ring has a circular shape, preferably. Preferably, the bearing housings each lie directly against a respective face. Bolts fastening the bearing housing may extend through a respective bearing housing into a corresponding face.

In other embodiments, the bolts are fastened at locations adjacent to a respective face. Such locations may be formed as threaded holes arranged on a circular line. Said circular line has a diameter, for example, larger than the outer parameter of the corresponding face.

The bearing housings are exclusively connected to the bed frame via the support structure. That is to say that any flow of forces from the bearing housings to the bed frame runs via the support structure. There is no other connection between the bearing housings and the bed frame.

A wind turbine is an apparatus to convert the wind's kinetic energy into electrical energy. The wind turbine comprises, for example, a rotor having one or more blades, a nacelle comprising the bearing arrangement and a tower holding, at its top end, the nacelle.

According to an embodiment, the faces are arranged at opposite ends of the support structure.

This makes access to the bearing housings, and therefore to the bearings even more easy.

According to a further embodiment, the faces face away from a geometric center of the support structure.

The geometric center can be determined, for example, when looking at a cross-section through the support structure along the shaft axis. The geometric center can be the point in which a first and a second line of symmetry intersect. The first line of symmetry is, for example, colinear with the shaft axis. The second line of symmetry is, for example, a line orientated perpendicularly with respect to the shaft axis.

According to a further embodiment, the bearing housings are bolted to the faces, preferably with bolts extending parallel to the shaft axis.

Such bolts are easy to access, for example when doing maintenance work on the bearings.

According to a further embodiment, the shaft extends through the support structure.

For example, the shaft will connect the rotor of the wind turbine with a generator of the wind turbine. The support structure being arranged between the rotor and the generators will therefore only extend along the shaft for a portion of the shaft's total length.

According to a further embodiment, a cross-section of the support structure, taken on a line perpendicular to the shaft axis, has a closed geometry. An example of a cross-section having a closed geometry is a ring shape or polygon shape. A circular ring shape may be preferable.

This configuration of the support structure increases bending stiffness further.

According to a further embodiment, the support structure has radial openings.

Such radial openings may reduce the weight of the support structure, while only marginally reducing its bending stiffness.

According to a further embodiment, the support structure is made from cast iron.

Thereby, the support structure is cheap to manufacture.

According to a further embodiment, the support structure is made from one piece, i.e. it is formed integrally.

Thus, the support structure is easy to manufacture and stiff. In other embodiments, the support structure may be made, for example, of two pieces, which are bolted together. For example, the two pieces may be formed as an upper and a lower casing, each casing having a semi-circular cross-section, for example.

According to a further embodiment, the bearing housings are made from steel.

For example, the bearing housings may be machined from a steel blank or made by forging. The steel may be a high alloy steel. Using such steel housings significantly reduces the risk of fretting and eliminates the need for sleeves, coatings etc.

According to a further embodiment, the support structure is connected to the bed frame by one or more feet. Preferably, the above-mentioned flow of forces goes through said feet.

According to a further embodiment, the bed frame is connected to a yaw bearing.

Thereby, the bed frame is supported rotatably. For example, the yaw bearing may be in turn connected to a tower of the wind turbine.

According to a further aspect, a wind turbine comprising the bearing arrangement as described herein is provided.

According to an embodiment, the wind turbine comprises a rotor and a generator. The shaft of the bearing arrangement connects the rotor with the generator.

This includes arrangements where the shaft is coupled using a coupling, for example a shrink disc coupling, to a gearbox. The gearbox in turn may be connected to the generator by another shaft. Hence, the shaft may be connected to the generator directly or indirectly.

According to a further aspect, a method for assembling the bearing arrangement previously described, said method comprising
a) making the shaft stand with its shaft axis being orientated vertically, and
b) lowering the support structure over the shaft and mounting the bearings to the opposite faces of the support structure by the bearing housings.

According to an embodiment, prior to step b), the bearings are mounted to the vertically orientated shaft, in particular by heat-shrinking.

According to an embodiment, a first of the bearing housings is mounted to a lower one of the bearings, the support structure is lowered over the shaft onto the first of the bearing housings, a second of the bearing housings is mounted to an upper one of the bearings and/or the second of the bearing housings is mounted to the support structure.

In particular, the first of the bearing housings is mounted to a lower one of the bearings, thereafter the support structure is lowered over the shaft onto the first of the bearing housings, thereafter the second of the bearing housings is mounted to an upper one of the bearings and thereafter the second of the bearing housings is mounted to the support structure.

Embodiments presently described with regard to the bearing arrangement equally apply to the method for assembling said bearing arrangement, and vice versa.

Further embodiments, features and advantages will become apparent from the subsequent description and dependent claims, taken in conjunction with the accompanying drawings, in which:
Fig. 1 is a perspective view of a wind turbine according to an embodiment;
Fig. 2 is a perspective view of a bearing arrangement according to an embodiment;
Fig. 3 is a lengthwise cross-section taken from the bearing arrangement of Fig. 2; and
Fig. 4 shows a flowchart illustrating a method for assembling the bearing arrangement according to Figs. 2 and 3 according to an embodiment.

In the figures, like reference numerals designate like or functionally equivalent elements, unless otherwise indicated.

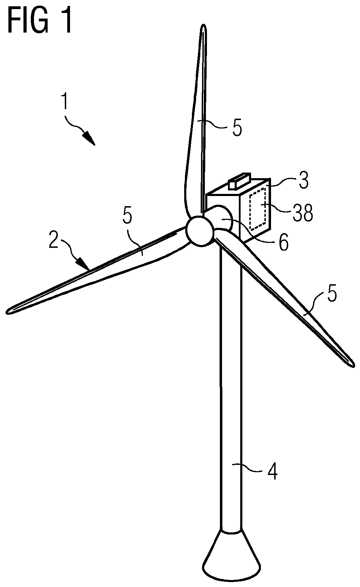

Fig. 1 shows a wind turbine 1 according to an embodiment.

The wind turbine 1 comprises a rotor 2 connected to a generator 38 arranged inside a nacelle 3. The nacelle 3 is arranged at the upper end of a tower 4 of the wind turbine 1.

The rotor 2 comprises, for example, three rotor blades 5. The rotor blades 5 are connected to a hub 6 of the wind turbine 1. Rotors 2 of this kind may have diameters ranging from, for example, 50 to 160 meters or even more. The rotor blades 5 are subjected to high wind loads. Accordingly, high loads act on a main shaft (not shown in Fig. 1) connecting the hub 6 to the generator 38.

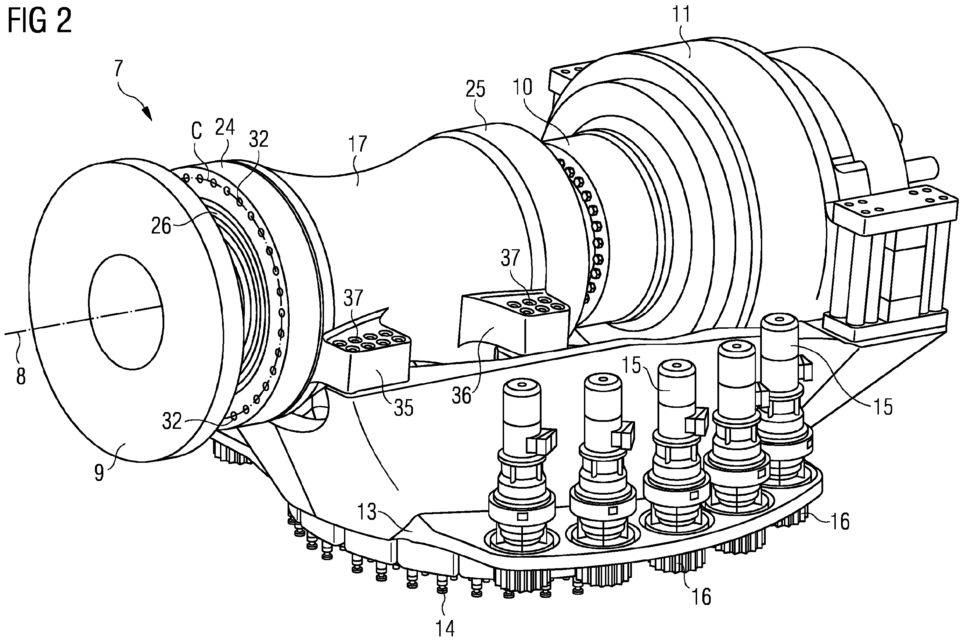

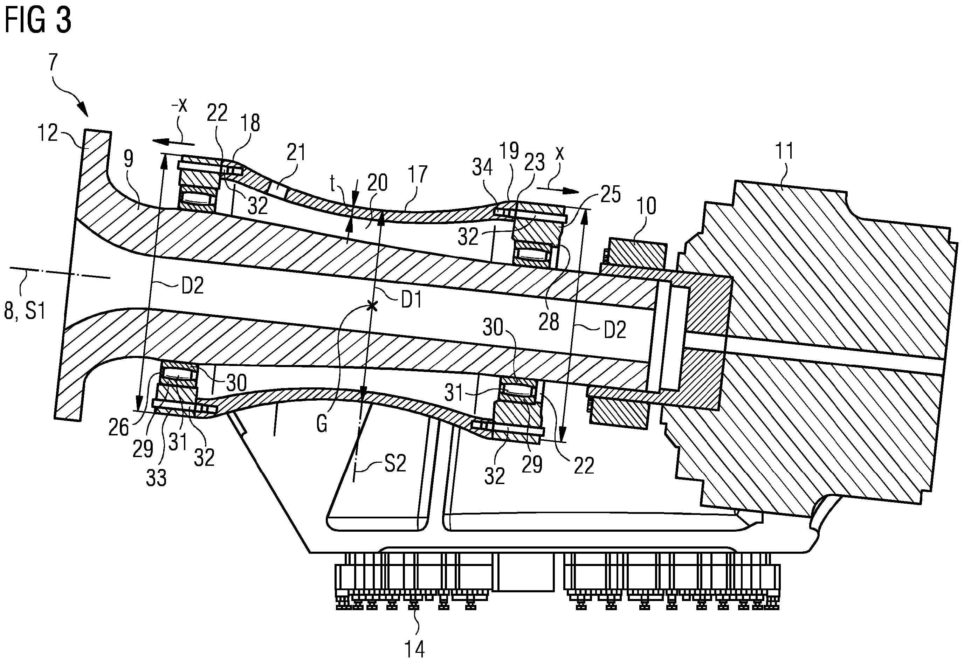

Fig. 2 shows a bearing arrangement 7 as used in the wind turbine 1 illustrated in Fig. 1. The bearing arrangement 7 is shown in a perspective view in Fig. 2. Fig. 3 illustrates a cross-section of the bearing arrangement 7. The cross-section is taken along a shaft axis 8 (see Fig. 2). The shaft axis 8 is the axis around which a main shaft 9 of the bearing arrangement 7 rotates when the rotor 2 drives the generator 38.

The main shaft 9 connects the hub 6 (see Fig. 1) to a coupling 10. The coupling 10 may be a shrink disc coupling. The coupling 10 connects the main shaft 9 to a gearbox 11. The gearbox 11 is connected to the generator 38 (see Fig. 1).

The main shaft 9 may be configured as a hollow shaft and may comprise a flange 12 for connecting to the hub 6 (see Fig. 1) .

Fig. 2 also shows a bed frame 13 of the bearing arrangement 7. The bed frame 13 is connected to a yaw bearing (not shown), for example by bolts 14. Electric motors 15 drive gears 16 respectively. The gears 16 mesh with a ring gear (not shown) connected to the tower 4. By action of the electric motors 15, the bed frame 13 is thus able to yaw around a yaw axis which substantially corresponds to the vertical axis of the tower 4 (see Fig. 1).

The bearing arrangement 7 further comprises a support structure 17 which is, for example, made of cast iron.

According to the embodiment and best seen in Fig. 3, the support structure 17 has an hourglass shape with a minimum diameter D1 halfway along the shaft axis 8 and maximum diameters D2 at its respective ends 18, 19 along the shaft axis 8.

The support structure 17 has a cross-section (taken along a line perpendicular to the shaft axis 8) which is of a circular ring shape, thus defining a hollow space 20 inside through which the main shaft 9 extends. A wall thickness t of the support structure 17 may vary, for example, along the shaft axis 8.

Also, the support structure 17 may comprise through holes in its walls to reduce weight. One such through hole is shown in Fig. 3 for illustration purposes only and is denoted by reference numeral 21.

At its respective ends 18, 19, the support structure 17 has faces 22 and 23. The faces 22, 23 face in opposite directions denoted by x and -x along the shaft axis 8. The faces 22, 23 have a circular ring shape. The faces 22, 23 face away from geometric center G of the support structure 17. In the example, the geometric center G of the support structure 17 is at the intersection of lines of symmetry S1, S2 about which the support structure 17 is symmetric. The line S1 is coaxial with the shaft axis 8. The line S2 runs at right angles with respect to the line S1. The geometric center G may well be defined otherwise.

The support structure 7 further comprises bearing housings 24, 25. The bearing housings 24, 25 are made from steel, in particular high alloy steel. The bearing houses 24, 25 may be machined or forged. Each bearing housing 24, 25 supports a bearing 26, 27 inside.

The bearings 26, 27 may be formed as gliding bearings or roller element bearings, in particular spherical bearings. One bearing, for example the bearing 25, may be formed as a fixed bearing, whereas the other bearing, for example, the bearing 24, is formed as a floating bearing.

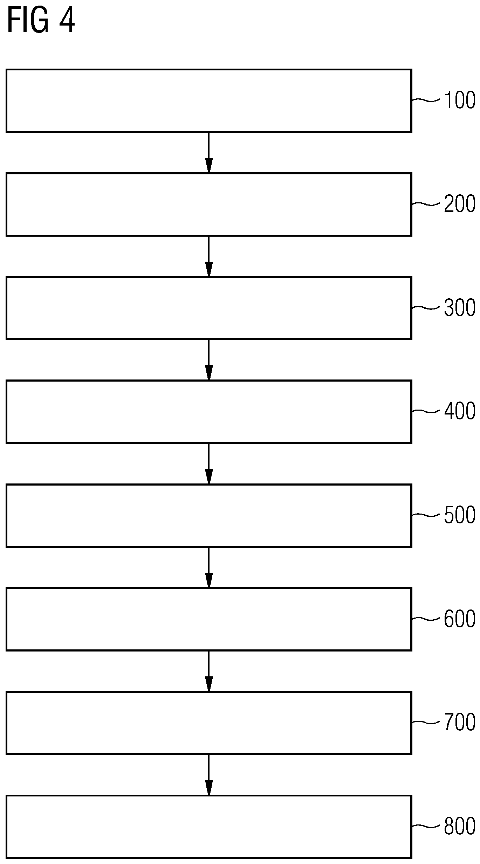

At least one of the bearing housings 24, 25 may comprise a shoulder 28 or other means to hold the bearing 26, 27 in place along the shaft axis 8. Therein, the bearing housings 24, 25 support a respective outer race 29 of each bearing 24, 25. A respective inner race 30 is fixed to the main shaft 9. The inner races 30 may be fixed to the main shaft 9 by, for example, heat shrinking, as explained in more detail with regard to Fig. 4. Roller elements between the outer and inner race 29, 30 are denoted by reference numeral 31 in Fig. 3.

The bearing housing 24 is bolted to the face 22, and the bearing housing 25 is bolted to the face 23 of the support structure 17. For example, each bearing housing 24, 25 has a number of holes formed therein. The holes are, for example, spaced apart along a circular line C (when seen in a direction along the shaft axis 8 - see Fig. 2). Each bolt 32 reaches through a respective hole 33 in the bearing housings 24, 25, and is threaded into a corresponding threaded hole 34 inside the faces 22, 23. Respective heads of the bolts 32 are not shown in Fig. 3. The bolts 32 extend in parallel with respect to the shaft axis 8. The bolts 32 thus force each bearing housing 24, 25 to lie directly against a corresponding face 22, 23.

Returning now to Fig. 2, it can be seen that the support structure 17 comprises feet 35, 36 on either side, thus in total four feet. Each foot 35, 36 is bolted by bolts 37 to the bed frame 13. The bed frame 13 may be formed with pockets or the like to receive the feet 35, 36.

The shaft 9 thus runs for a portion of its length through the support structure 17, while being supported by the bearings 26, 27 at opposite ends of the support structure 17. Thus, when a bending moment is applied to the main shaft 9, the bearings 26, 27, the bearing housing 24, 25 and the support structure 17 form a stiff unit counter-acting said moment. All forces resulting from said moment are transferred via the feet 35, 36 of the support structure 17 into the bed frame 13. There is no single point support of the bearings 26, 27 directly at the bed frame 13. Thus, all forces need to flow through the feet 35, 36.

At the same time, the bearing housings 24, 25 and thus the bearings 26, 27 are easily accessible from the outside, for example, to do maintenance, such as replacing seals on the bearings 26, 27.

Fig. 4 illustrates a method for assembling the bearing arrangement 7 of Figs. 2 and 3.

In a first step 100, the main shaft 9 is made to stand upright with its shaft axis 8 being orientated vertically. For example, in this position, the main shaft 9 stands on its flange 12 serving as a foot on a factory floor.

In a step 200, the bearings 26, 27 are each heated and then moved, from above, down along the shaft axis 8 into their respective locations. At those locations, the bearings 26, 27 cool down and are thus heat-shrunk onto the main shaft 9. To this end, the lower bearing 26 has a larger inner diameter than the upper bearing 27.

In a step 300, the bearing housing 24 is fitted to the lower bearing 26.

In a step 400, the support structure 17 is lowered from above (held there, for example, with a crane) down along the shaft axis 8 until the lower face 22 comes to lie against the bearing housing 24. For example, at this position, the lower bearing housing 24 is connected by the bolts 32 to the support structure 17 (step 500).

In a step 600, the upper bearing housing 25 is fitted to the upper bearing 27. At this time, the upper bearing housing 25 lies against the upper face 23 of the support structure 17. Thereafter, the upper bearing housing 25 is bolted by bolts 32 to the support structure 17 (step 700).

In a step 800, the unit made up of the main shaft 9, the support structure 17, the bearing housings 24, 25 and the bearings 26, 27 is turned into a horizontal position and lifted onto the bed frame 13. In this position, the feet 35, 36 of the support structure 17 are bolted by the bolts 37 to the bed frame 13. Thereafter, the coupling 10 is fitted to the main shaft 9. Then, the gearbox 11 is mounted on the bed frame 13 and connected to the coupling 10.

## Claims

1. A bearing arrangement (7) for a wind turbine (1), comprising a bed frame (13), a support structure (17) mounted to the bed frame (13), a shaft (9), bearings (26, 27) supporting the shaft (9) rotatably around a shaft axis (8), and bearing housings (24, 25) supporting one of the bearings (26, 27) respectively, wherein the bearing housings (24, 25) are mounted on opposite faces (22, 23) of the support structure (17), the faces (22, 23) facing in the axial direction (x, -x) with respect to the shaft axis (8), **characterized in that** the bearing housings (24, 25) are exclusively connected to the bed frame (13) via the support structure (17).

2. The bearing arrangement of claim 1, wherein the faces (22, 23) are arranged at opposite ends (18, 19) of the support structure (17).

3. The bearing arrangement of claim 1 or 2, wherein the faces (22, 23) face away from a geometric center (G) of the support structure (17).

4. The bearing arrangement of one of claims 1 to 3, wherein the bearing housings (24, 25) are bolted to the faces (22, 23), preferably with bolts (32) extending parallel to the shaft axis (8).

5. The bearing arrangement of one of claims 1 to 4, wherein the shaft (9) extends through the support structure (17).

6. The bearing arrangement of one of claims 1 to 5, wherein a cross-section of the support structure (17) taken on a line in a direction perpendicular to the shaft axis (8) has a closed geometry.

7. The bearing arrangement of one of claims 1 to 6, wherein the support structure (17) has radial openings (21).

8. The bearing arrangement of one of claims 1 to 7, wherein the support structure (17) is made from cast iron.

9. The bearing arrangement of one of claims 1 to 8, wherein the bearing housings (24, 25) are made from steel.

10. The bearing arrangement of one of claims 1 to 9, wherein the support structure (17) is connected to the bed frame by one or more feet (35, 36).

11. A wind turbine (1) comprising the bearing arrangement (7) of one of claims 1 to 10.

12. The wind turbine of claim 11, further comprising a rotor (2) and a generator (38), wherein the shaft (8) of the bearing arrangement (7) connects the rotor (2) with the generator (38).

13. A method for assembling the bearing arrangement (7) of one of claims 1 to 10, comprising
a) making (100) the shaft (9) stand with its shaft axis (8) being orientated vertically, and
b) lowering (400, 500, 700) the support structure (17) over the shaft (9) and mounting the bearing housings (24, 25) to the opposite faces (22, 23) of the support structure (17).

14. The method of claim 13, wherein, prior to step b), the bearings (26, 27) are mounted to the vertically orientated shaft (9), in particular by heat-shrinking.

15. The method of claim 14, wherein a first of the bearing housings (24, 25) is mounted to a lower one of the bearings (26, 27), the support structure (17) is lowered over the shaft (9) onto the first of the bearing housings (24, 25), a second of the bearing housings (24, 25) is mounted to an upper one of bearings (27) and/or the second of the bearing housings (24, 25) is mounted to the support structure (17).

## Patentansprüche

1. Lageranordnung (7) für eine Windkraftanlage (1), einen Einbettungsrahmen (13), eine Trägerstruktur (17), die auf dem Einbettungsrahmen (13) montiert ist, eine Welle (9), Lager (26, 27), die die Welle (9) drehbar um eine Wellenachse (8) lagern, und Lagergehäuse (24, 25), die je eines der Lager (26, 27) tragen, umfassend, wobei die Lagergehäuse (24, 25) auf entgegengesetzten Flächen (22, 23) der Trägerstruktur (17) montiert sind, wobei die Flächen (22, 23) der Axialrichtung (x, -x) in Bezug zur Wellenachse (8) zugewandt sind, **dadurch gekennzeichnet, dass** die Lagergehäuse (24, 25) ausschließlich über die Trägerstruktur (17) mit dem Einbettungsrahmen (13) verbunden sind.

2. Lageranordnung nach Anspruch 1, wobei die Flächen (22, 23) an entgegengesetzten Enden (18, 19) der Trägerstruktur (17) angeordnet sind.

3. Lageranordnung nach Anspruch 1 oder 2, wobei die Flächen (22, 23) von der geometrischen Mitte (G) der Trägerstruktur (17) abgewandt sind.

4. Lageranordnung nach einem der Ansprüche 1 bis 3, wobei die Lagergehäuse (24, 25) vorzugsweise mit Schrauben (32), die sich parallel zur Wellenachse (8) erstrecken, mit den Flächen (22, 23) verschraubt sind.

5. Lageranordnung nach einem der Ansprüche 1 bis 4, wobei sich die Welle (9) durch die Trägerstruktur (17) erstreckt.

6. Lageranordnung nach einem der Ansprüche 1 bis 5, wobei ein Querschnitt der Trägerstruktur (17), der an einer Linie senkrecht zur Wellenachse (8) genommen wird, eine geschlossene Geometrie aufweist.

7. Lageranordnung nach einem der Ansprüche 1 bis 6, wobei die Trägerstruktur (17) radiale Öffnungen (21) aufweist.

8. Lageranordnung nach einem der Ansprüche 1 bis 7, wobei die Trägerstruktur (17) aus Gusseisen besteht.

9. Lageranordnung nach einem der Ansprüche 1 bis 8, wobei die Lagergehäuse (24, 25) aus Stahl bestehen.

10. Lageranordnung nach einem der Ansprüche 1 bis 9, wobei die Trägerstruktur (17) über einen oder mehrere Füße (35, 36) mit dem Einbettungsrahmen verbunden ist.

11. Windkraftanlage (1), die Lageranordnung (7) nach einem der Ansprüche 1 bis 10 umfassend.

12. Windkraftanlage nach Anspruch 11, ferner einen Rotor (2) und einen Generator (38) umfassend, wobei die Welle (8) der Lageranordnung (7) den Rotor (2) mit dem Generator (38) verbindet.

13. Verfahren zur Montage der Lageranordnung (7) nach einem der Ansprüche 1 bis 10, Folgendes umfassend:
a) Anordnen (100) der Welle (9), sodass deren Wellenachse (8) vertikal ausgerichtet ist, und
b) Absenken (400, 500, 700) der Trägerstruktur (17) über die Welle (9) und Montieren der Lagergehäuse (24, 25) an den entgegengesetzten Flächen (22, 23) der Trägerstruktur (17).

14. Verfahren nach Anspruch 13, wobei die Lager (26, 27) vor Schritt b) an der vertikal ausgerichteten Welle (9) montiert werden, insbesondere durch Aufschrumpfen.

15. Verfahren nach Anspruch 14, wobei ein erstes der Lagergehäuse (24, 25) an einem unteren der Lager (26, 27) montiert wird, wobei die Trägerstruktur (17) über die Welle (9) auf das erste der Lagergehäuse (24, 25) abgesenkt wird, wobei ein zweites der Lagergehäuse (24, 25) an einem oberen der Lager (27) montiert wird und/oder wobei das zweite der Lagergehäuse (24, 25) an der Trägerstruktur (17) montiert wird.

## Revendications

1. Agencement de palier (7) pour une éolienne (1), comprenant un châssis berceau (13), une structure de support (17) montée sur le châssis berceau (13), un arbre (9), des paliers (26, 27) portant l'arbre (9) de manière rotative autour d'un axe d'arbre (8), et des logements de palier (24, 25) portant l'un des paliers (26, 27) respectivement, dans lequel les logements de palier (24, 25) sont montés sur des faces opposées (22, 23) de la structure de support (17), les faces (22, 23) faisant face dans la direction axiale (x, -x) par rapport à l'axe d'arbre (8), **caractérisé en ce que** les logements de palier (24, 25) sont exclusivement reliés au châssis berceau (13) via la structure de support (17).

2. Agencement de palier selon la revendication 1, dans lequel les faces (22, 23) sont agencées à des extrémités opposées (18, 19) de la structure de support (17).

3. Agencement de palier selon la revendication 1 ou 2, dans lequel les faces (22, 23) font face à l'opposé d'un centre géométrique (G) de la structure de support (17).

4. Agencement de palier selon l'une des revendications 1 à 3, dans lequel les logements de palier (24, 25) sont boulonnés sur les faces (22, 23), de préférence avec des boulons (32) s'étendant parallèlement à l'axe d'arbre (8).

5. Agencement de palier selon l'une des revendications 1 à 4, dans lequel l'arbre (9) s'étend à travers la structure de support (17) .

6. Agencement de palier selon l'une des revendications 1 à 5, dans lequel une section transversale de la structure de support (17) prise sur une ligne dans une direction perpendiculaire à l'axe d'arbre (8) possède une géométrie fermée.

7. Agencement de palier selon l'une des revendications 1 à 6, dans lequel la structure de support (17) possède des ouvertures radiales (21).

8. Agencement de palier selon l'une des revendications 1 à 7, dans lequel la structure de support (17) est constituée de fonte.

9. Agencement de palier selon l'une des revendications 1 à 8, dans lequel les logements de palier (24, 25) sont constitués d'acier.

10. Agencement de palier selon l'une des revendications 1 à 9, dans lequel la structure de support (17) est reliée au châssis berceau par un ou plusieurs pieds (35, 36).

11. Éolienne (1) comprenant l'agencement de palier (7) selon l'une des revendications 1 à 10.

12. Éolienne selon la revendication 11, comprenant en outre un rotor (2) et un générateur (38), dans lequel l'arbre (8) de l'agencement de palier (7) relie le rotor (2) au générateur (38).

13. Procédé pour l'assemblage de l'agencement de palier (7) selon l'une des revendications 1 à 10, comprenant
a) le fait d'amener (100) l'arbre (9) à se tenir avec son axe d'arbre (8) orienté verticalement, et
b) l'abaissement (400, 500, 700) de la structure de support (17) au-dessus de l'arbre (9) et le montage des logements de palier (24, 25) sur les faces opposées (22, 23) de la structure de support (17).

14. Procédé selon la revendication 13, dans lequel, avant l'étape b), les paliers (26, 27) sont montés sur l'arbre (9) orienté verticalement, en particulier par thermo-rétraction.

15. Procédé selon la revendication 14, dans lequel un premier logement de palier parmi les logements de palier (24, 25) est monté sur un palier inférieur parmi les paliers (26, 27), la structure de support (17) est abaissée au-dessus de l'arbre (9) sur le premier logement de palier parmi les logements de palier (24, 25), un second logement de palier parmi les logements de palier (24, 25) est monté sur un palier supérieur parmi les paliers (27) et/ou le second logement de palier parmi les logements de palier (24, 25) est monté sur la structure de support (17).
